# EUROPÄISCHE PATENTSCHRIFT

(11) **EP 2 636 332 B1**
(45) Veröffentlichungstag und Bekanntmachung des Hinweises auf die Patenterteilung: **09.10.2019**
(21) Anmeldenummer: 13157865.0
(22) Anmeldetag: 05.03.2013
(51) Int. Cl.: A45C 13/10, B64D 11/06, B63C 9/23, B64D 25/18

(54) **Verstauvorrichtung, insbesondere Schwimmwestenverstauvorrichtung**
Stowing device, in particular life jacket stowing device
Dispositif de rangement, notamment dispositif de rangement de gilets de sauvetage

(30) Priorität: 05.03.2012 DE 102012004154
(43) Veröffentlichungstag der Anmeldung: 11.09.2013
(73) Patentinhaber: Recaro Aircraft Seating GmbH & Co. KG, 74523 Schwäbisch Hall (DE)
(72) Erfinder: Meisl, Stephan, 93051 Regensburg (DE)
(74) Vertreter: Daub, Thomas

(56) Entgegenhaltungen:
- FR-A5- 2 129 702
- JP-A- 2002 187 594
- US-A- 4 297 758
- US-B2- 6 902 453

## Beschreibung

### Stand der Technik

Die Erfindung geht aus von einer Verstauvorrichtung, insbesondere einer Schwimmwestenverstauvorrichtung, mit einer Verstaueinheit, die ein erstes Verschlusselement und zumindest ein zweites Verschlusselement aufweist, die dazu vorgesehen sind, einen Verstauraum der Verstaueinheit von einer Umgebung abzugrenzen.

Eine solche Verstauvorrichtung ist bereits aus der US 6 902 453 B2 bekannt.

Es liegt der Erfindung insbesondere die Aufgabe zugrunde, ein in der Verstaueinheit verstautes Objekt vor äußeren Einflüssen oder Beschädigungen zu schützen.

Diese Aufgabe wird durch eine Verstauvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Verstauvorrichtung, insbesondere von einer Schwimmwestenverstauvorrichtung, mit einer Verstaueinheit, die ein erstes Verschlusselement und zumindest ein zweites Verschlusselement aufweist, die dazu vorgesehen sind, einen Verstauraum der Verstaueinheit von einer Umgebung abzugrenzen.

Es wird vorgeschlagen, dass die Verstauvorrichtung zumindest ein Schleusenelement aufweist, das dazu vorgesehen ist, einen Durchgriff an dem ersten und dem zweiten Verschlusselement vorbei in den Verstauraum zumindest zu behindern, wodurch ein im Verstauraum befindlicher Gegenstand, wie insbesondere eine Schwimmweste, besonders gut vor äußeren Einflüssen oder Beschädigungen geschützt ist. Unter einer "Verstaueinheit" soll in diesem Zusammenhang insbesondere eine Einheit verstanden werden, die dazu vorgesehen ist, zumindest einen Gegenstand zumindest zeitweise zu verstauen und/oder vor äußeren Einflüssen zu schützen. Bevorzugt ist die Verstaueinheit dazu vorgesehen, zum Einlegen des zumindest einen Gegenstands geöffnet und/oder zum Entnehmen des zumindest einen Gegenstands geschlossen zu werden. Unter einem "Verschlusselement" soll in diesem Zusammenhang insbesondere ein von einer Verstauposition in eine Gebrauchsposition bewegbares Element verstanden werden, das dazu vorgesehen ist, den Verstauraum der Verstaueinheit in der Verstauposition von einer Umgebung abzugrenzen und in der Gebrauchsposition zu einer Umgebung hin zu öffnen. Unter einer "Verstauposition" soll in diesem Zusammenhang insbesondere eine Position eines Bauteils verstanden werden, in welcher sich dieses in einem Verstauzustand der Verstauvorrichtung befindet. Unter einer "Gebrauchsposition" soll in diesem Zusammenhang insbesondere eine Position eines Bauteils verstanden werden, in welcher sich dieses in einem Gebrauchszustand der Verstauvorrichtung befindet. Unter einem "Verstauraum" soll in diesem Zusammenhang insbesondere ein Raum verstanden werden, der dazu vorgesehen ist, einen Gegenstand aufzunehmen und von einer Umgebung abzugrenzen. Unter einer "Umgebung" soll in diesem Zusammenhang ein die Verstauvorrichtung umgebender Raum verstanden werden. Unter "abgrenzen" soll in diesem Zusammenhang insbesondere abschirmen und/oder räumlich trennen verstanden werden. Unter einem "Schleusenelement" soll in diesem Zusammenhang insbesondere ein Element verstanden werden, das dazu vorgesehen ist, in einer Verstauposition einen Zugang von einer Umgebung zu einem abgeschlossenen Raum vor einem unerwünschten Zugriff zu sichern. Vorteilhaft ist das Schleusenelement dazu vorgesehen, den Zugang von der Umgebung zu dem abgeschlossenen Raum in einer Gebrauchsposition freizugeben. Besonders bevorzugt ist das Schleusenelement relativ zu anderen, den Raum begrenzenden Wandungen beweglich ausgebildet. Weiterhin vorteilhaft weist das Schleusenelement zumindest eine Wandung auf. Erfindungsgemäß differiert das Schleusenelement von dem ersten und zweiten Verschlusselement, einem Flausch- und Hakensystem, einem Klebeband und/oder einer Naht. Unter einem "Durchgriff" soll ein vollständiges Durchführen eines insbesondere lang gestreckten Gegenstands und/oder eines Körperteils von der Umgebung in den Verstauraum verstanden werden. Unter "vorgesehen" soll insbesondere speziell ausgelegt und/oder ausgestattet verstanden werden.

In einer weiteren Ausgestaltung der Erfindung wird vorgeschlagen, dass das Schleusenelement, von der Umgebung in Richtung des Verstauraums betrachtet, hinter dem ersten und dem zweiten Verschlusselement angeordnet ist, wodurch das Schleusenelement vor äußeren Einflüssen oder Beschädigungen vorteilhaft geschützt ist.

Ferner wird vorgeschlagen, dass das Schleusenelement als Schleusenklappe ausgebildet ist, wodurch das Schleusenelement in einer Gebrauchsposition weggeklappt und ein im Verstauraum angeordneter Gegenstand besonders leicht entfernt werden kann. Unter einer "Schleusenklappe" soll in diesem Zusammenhang insbesondere eine schwenkbar gelagerte und/oder flexibel auslenkbare Klappe verstanden werden, die dazu vorgesehen ist, in einer Verstauposition einen Zugang von einer Umgebung zu einem abgeschlossenen Raum vor einem unerwünschten Zugriff zu sichern.

Des Weiteren wird vorgeschlagen, dass das erste Verschlusselement von einer ersten Verschlussklappe gebildet ist, wodurch das Verschlusselement in einer Gebrauchsposition weggeklappt und ein im Verstauraum angeordneter Gegenstand besonders leicht entfernt werden kann. Ebenso vorteilhaft ist das zweite Verschlusselement von einer zweiten Verschlussklappe gebildet. Unter einer "Verschlussklappe" soll in diesem Zusammenhang insbesondere ein schwenkbar gelagertes und/oder flexibel auslenkbares Verschlusselement verstanden werden.

Ein besonders einfaches und zugleich sicheres Verschließen des Verstauraums kann erreicht werden, wenn das zweite Verschlusselement in einem Verstauzustand zumindest teilweise am ersten Verschlusselement und zumindest teilweise am Schleusenelement anliegt. Unter "anliegen" soll in diesem Zusammenhang insbesondere direkt kontaktieren und bevorzugt flächig miteinander verbunden sein verstanden werden. In einer zusätzlichen Ausgestaltung weisen das erste und das zweite Verschlusselement im Wesentlichen deckungsgleiche Querschnitte auf.

Weiterhin vorteilhaft grenzt das Schleusenelement an den Verstauraum zumindest teilweise an, wodurch eine besonders kompakte Bauweise der Verstauvorrichtung erreicht werden kann. Unter "angrenzen" soll in diesem Zusammenhang insbesondere eine Begrenzungsfläche bilden verstanden werden.

Ferner wird vorgeschlagen, dass das erste Verschlusselement und das Schleusenelement an einer ersten Außenwandung der Verstaueinheit angeordnet sind, wodurch ein besonders einfacher Öffnungs- und Verschließvorgang der Verstauvorrichtung erreicht werden kann. Unter einer "Außenwandung" soll in diesem Zusammenhang insbesondere eine Wandung verstanden werden, die dazu vorgesehen ist, eine Außenfläche zu bilden, die einer Umgebung zugewandt beziehungsweise von der Verstauvorrichtung abgewandt ist. Bevorzugt bildet die Außenwandung ebenfalls eine Begrenzungsfläche des Verstauraums.

In einer weiteren Ausgestaltung der Erfindung wird vorgeschlagen, dass das zweite Verschlusselement an einer zweiten Außenwandung angeordnet ist, die der ersten Außenwandung gegenüberliegend angeordnet ist, wodurch ein besonders sicherer Verschluss des Verstauraums erreicht werden kann. Unter "gegenüberliegend" soll in diesem Zusammenhang insbesondere verstanden werden, dass die zweite Außenwandung eine zweite Außenfläche bildet, die einer ersten Außenfläche der ersten Außenwandung abgewandt ist. Insbesondere sind die erste Außenwandung und die zweite Außenwandung zum Großteil vom Verstauraum getrennt. Unter "zum Großteil" soll in diesem Zusammenhang insbesondere um mehr als 50%, bevorzugt um mehr als 80% und besonders bevorzugt um mehr als 95% verstanden werden.

Des Weiteren wird vorgeschlagen, dass das erste Verschlusselement, das zweite Verschlusselement und das Schleusenelement jeweils zumindest zum Großteil von einem biegeweichen Material gebildet sind, wodurch zusätzliche, für eine Bewegung benötigte Bauteile, wie insbesondere Gelenke und/oder Scharniere, vermieden werden können. Zusätzlich wird vorgeschlagen, dass das erste Verschlusselement, das zweite Verschlusselement und/oder das Schleusenelement mit einem Textilmaterial, wie insbesondere einem Stoffbezug, überzogen ist.

Gewicht und Produktionskosten können eingespart werden, wenn das erste Verschlusselement, das zweite Verschlusselement und das Schleusenelement jeweils zumindest zum Großteil von einer Kunststofffolie gebildet sind. Unter einer "Kunststofffolie" soll in diesem Zusammenhang insbesondere ein aus Kunststoff bestehendes, biegeweiches, flächiges Objekt mit einer Dicke von weniger als 8 mm, bevorzugt von weniger als 5 mm und besonders bevorzugt von weniger als 3 mm verstanden werden.

Eine besonders einfache Verschlusssicherung des Verstauraums kann erreicht werden, wenn die Verstauvorrichtung eine Verschlusseinheit umfasst, die dazu vorgesehen ist, das erste und zweite Verschlusselement in einem Verstauzustand miteinander zu verbinden. Besonders vorteilhaft ist die Verschlusseinheit von einer "Klettverschlusseinheit" gebildet. Unter einer "Verschlusseinheit" soll in diesem Zusammenhang insbesondere eine Einheit verstanden werden, die dazu vorgesehen ist, zumindest zwei Bauteile lösbar miteinander zu verbinden. Unter einer "Klettverschlusseinheit" soll insbesondere eine Einheit verstanden werden, die zumindest einen Teil eines Klettverschlusses aufweist, wie beispielsweise ein Hakenband, ein Flauschband, ein Pilzband und/oder ein Veloursband.

Ferner wird vorgeschlagen, dass die Verstauvorrichtung eine Lascheneinheit umfasst, die dazu vorgesehen ist, einen Gegenstand, insbesondere eine Schwimmweste, aus dem Verstauraum zu ziehen, wodurch ein besonders schnelles Leeren der Verstauvorrichtung erreicht werden kann. Unter einer "Lascheneinheit" soll in diesem Zusammenhang insbesondere eine Einheit verstanden werden, die ein biegeweiches, bandartiges Element umfasst, wobei das Element zum Öffnen der Verstauvorrichtung und/oder zum Herausziehen eines Gegenstands aus dem Verstauraum vorgesehen ist.

Ein Öffnungsvorgang der Verstauvorrichtung kann angezeigt werden, wenn die Verstauvorrichtung eine Versiegelungseinheit aufweist, die dazu vorgesehen ist, bei dem Öffnungsvorgang zumindest teilweise zerstört zu werden. Unter einer "Versiegelungseinheit" soll in diesem Zusammenhang insbesondere eine Einheit verstanden werden, die zumindest ein plombenartiges Versiegelungselement umfasst. Unter einem "Öffnungsvorgang" soll in diesem Zusammenhang insbesondere ein Vorgang verstanden werden, bei welchem die Verstauvorrichtung von dem Verstauzustand in den Gebrauchszustand gebracht wird.

### Zeichnung

Weitere Vorteile ergeben sich aus der folgenden Zeichnungsbeschreibung. In den Zeichnungen ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Vorderansicht einer erfindungsgemäßen Verstauvorrichtung,
- Fig. 2: eine schematische Schnittdarstellung der Verstauvorrichtung aus Figur 1 in einem Gebrauchszustand und
- Fig. 3: eine schematische Schnittdarstellung der Verstauvorrichtung aus Figur 1 in einem Verstauzustand.

### Beschreibung des Ausführungsbeispiels

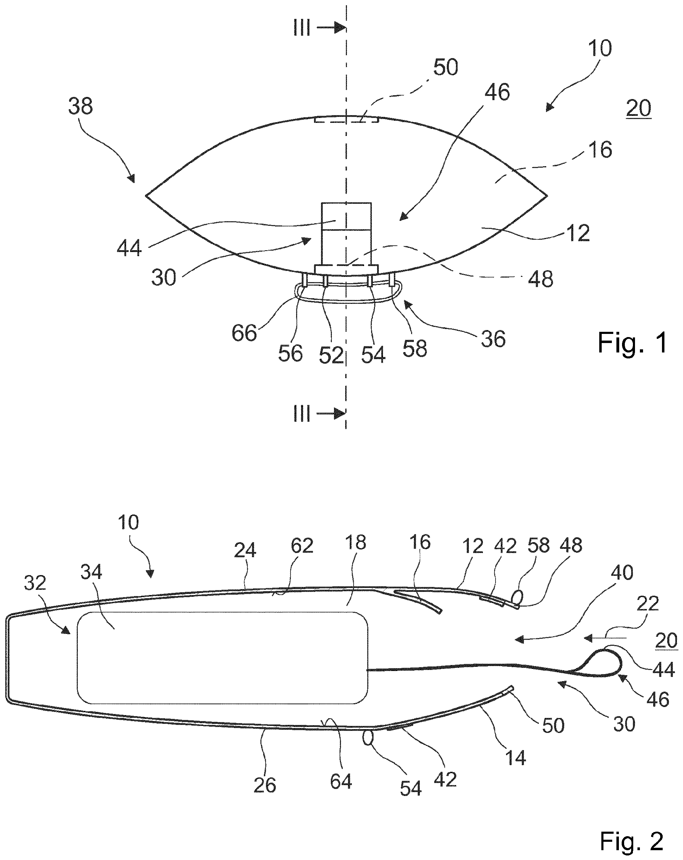

In Figur 1 ist schematisch eine erfindungsgemäße Verstauvorrichtung gezeigt, die als Schwimmwestenverstauvorrichtung ausgebildet ist. Die Verstauvorrichtung weist zum Verstauen eines Gegenstands 32, der von einer Schwimmweste 34 gebildet ist, eine Verstaueinheit 10 auf. Die Verstaueinheit 10 umfasst eine erste Außenwandung 24 und eine zweite Außenwandung 26. Die erste Außenwandung 24 und die zweite Außenwandung 26 sind jeweils von einer biegeweichen Kunststofffolie gebildet. Die erste Außenwandung 24 ist in einem Randbereich 38 an drei Kanten mit der zweiten Außenwandung 26 vernäht. Es ist in diesem Zusammenhang jedoch auch denkbar, die erste Außenwandung 24 auf eine andere, dem Fachmann als sinnvoll erscheinende Weise mit der zweiten Außenwandung 26 zu verbinden. Durch eine Wölbung der ersten Außenwandung 24 und der zweiten Außenwandung 26 spannen diese einen Verstauraum 18 auf, der zur Aufnahme der Schwimmweste 34 vorgesehen ist. Die erste Außenwandung 24 und die zweite Außenwandung 26 bilden eine Außenfläche, die einer Umgebung 20 der Verstauvorrichtung zugewandt beziehungsweise von der Verstauvorrichtung abgewandt ist. Die erste Außenwandung 24 und die zweite Außenwandung 26 bilden jeweils eine Begrenzungsfläche 62, 64 des Verstauraums 18. Der Verstauraum 18 weist im Gebrauchszustand eine Öffnung 40 auf. Durch die Öffnung 40 lässt sich im Gebrauchszustand während einer Fertigung die Schwimmweste 34 in den Verstauraum 18 einlegen. Bei Bedarf lässt sich die Schwimmweste 34 im Gebrauchszustand aus dem Verstauraum 18 entfernen.

Für eine sichere Lagerung der Schwimmweste 34 wird die Verstauvorrichtung in einen Verstauzustand gebracht. Dazu weist die Verstaueinheit 10 ein erstes Verschlusselement 12 und ein zweites Verschlusselement 14 auf. Das erste Verschlusselement 12 und das zweite Verschlusselement 14 verschließen die Öffnung 40 im Verstauzustand. Ein Einlegen oder Entnehmen des Gegenstands 32 in den Verstauraum 18 im Verstauzustand wird vermieden. Der Verstauraum 18 der Verstaueinheit 10 ist somit im Verstauzustand durch das erste Verschlusselement 12 und das zweite Verschlusselement 14 von der Umgebung 20 abgegrenzt.

Das erste Verschlusselement 12 ist von einer ersten biegeweichen Verschlussklappe gebildet. Das zweite Verschlusselement 14 ist von einer zweiten biegeweichen Verschlussklappe gebildet. Dabei sind das erste Verschlusselement 12 und das zweite Verschlusselement 14 jeweils flexibel auslenkbar. Es ist in diesem Zusammenhang jedoch auch denkbar, dass ein Fachmann zusätzlich Gelenke, wie beispielsweise Scharniere, vorsieht, welche das erste Verschlusselement 12 und das zweite Verschlusselement 14 relativ zur ersten Außenwandung 24 und zur zweiten Außenwandung 26 schwenkbar lagern. Das erste Verschlusselement 12 ist an der ersten Außenwandung 24 angeordnet. Das zweite Verschlusselement 14 ist an der zweiten Außenwandung 26 angeordnet, die der ersten Außenwandung 24 gegenüberliegend angeordnet ist. Das erste Verschlusselement 12 und das zweite Verschlusselement 14 weisen im Wesentlichen deckungsgleiche Querschnitte auf.

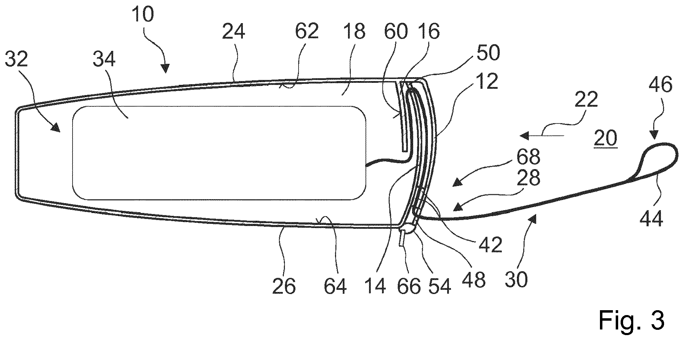

Im Gebrauchszustand erstrecken sich das erste Verschlusselement 12 und das zweite Verschlusselement 14 jeweils im Wesentlichen parallel zu der ersten Au ßenwandung 24 und der zweiten Außenwandung 26 (Fig. 2). Im Verstauzustand erstrecken sich das erste Verschlusselement 12 und das zweite Verschlusselement 14 jeweils im Wesentlichen senkrecht zu der ersten Außenwandung 24 und der zweiten Außenwandung 26. Im Verstauzustand liegen das erste Verschlusselement 12 und das zweite Verschlusselement 14 aneinander an und sind miteinander verbunden (Fig. 3). Das erste Verschlusselement 12 bildet im Verstauzustand eine Außenwandung der Verstaueinheit 10.

Die Verstauvorrichtung umfasst eine Verschlusseinheit 68, die von einer Klettverschlusseinheit 28 gebildet ist. Die Klettverschlusseinheit 28 verbindet das erste Verschlusselement 12 und das zweite Verschlusselement 14 im Verstauzustand miteinander. Die Klettverschlusseinheit 28 weist ein Flausch- und Hakenband 42 auf. Es sind in diesem Zusammenhang jedoch auch andere, dem Fachmann als sinnvoll erscheinende Klettverschlusssysteme denkbar, wie insbesondere Pilzbänder oder Haken- und Veloursbänder.

Zum Herausnehmen der Schwimmweste 34 umfasst die Verstauvorrichtung eine Lascheneinheit 30. Die Lascheneinheit 30 ist dazu vorgesehen, einen Gegenstand 32, wie insbesondere die Schwimmweste 34, aus dem Verstauraum 18 zu ziehen. Dazu weist die Lascheneinheit 30 ein bandförmiges, biegeweiches Zugband 44 auf. Das Zugband 44 besteht aus einem Textilgewebe. Es ist in diesem Zusammenhang jedoch auch denkbar, andere, dem Fachmann als sinnvoll erscheinende Materialien zu verwenden, wie insbesondere Kunststoffmaterialien. An einem freien Ende weist das Zugband 44 einen laschenartigen Griff 46 auf. Vom Griff 46 aus verläuft das Zugband 44 schlangenförmig beziehungsweise S-förmig am ersten Verschlusselement 12 und am zweiten Verschlusselement 14 entlang in den Verstauraum 18. Im Verstauraum 18 ist das Zugband 44 an der Schwimmweste 34 befestigt. Am ersten Verschlusselement 12 und am zweiten Verschlusselement 14 ist jeweils an einer freien Kante eine flache Aussparung 48, 50 angeordnet. In den Aussparungen 48, 50 verläuft in einem Verstauzustand das Zugband 44. Zieht ein Benutzer an dem Griff 46, werden das erste Verschlusselement 12 und das zweite Verschlusselement 14 von einem Bereich der Aussparungen 48, 50 aus vom Verstauraum 18 weggeklappt. Somit findet durch ein Ziehen am Griff 46 ein Öffnungsvorgang der Verstauvorrichtung statt. Beim Öffnungsvorgang wird die Verstauvorrichtung von dem Verstauzustand in den Gebrauchszustand gebracht. Die Schwimmweste 34 wird während des Öffnungsvorgangs aus dem Verstauraum 18 herausgezogen.

Die Verstauvorrichtung weist zudem eine Versiegelungseinheit 36 auf, die bei dem Öffnungsvorgang teilweise zerstört wird. Dazu umfasst die Versiegelungseinheit 36 Außenwandungslaschen 52, 54, die an der zweiten Außenwandung 26 angeordnet sind. Ferner beinhaltet die Versiegelungseinheit 36 Verschlusselementlaschen 56, 58, die am ersten Verschlusselement 12 angeordnet sind. Die Außenwandungslaschen 52, 54 und die Verschlusselementlaschen 56, 58 sind versetzt zueinander angeordnet. Wird das erste Verschlusselement 12 geschlossen, kommen die Außenwandungslaschen 52, 54 in Deckung mit den Verschlusselementlaschen 56, 58. Nun wird ein Versiegelungselement 66, das von einer Plombe gebildet ist, durch die Außenwandungslaschen 52, 54 und die Verschlusselementlaschen 56, 58 geführt und versiegelt. Ein Öffnen des ersten Verschlusselements 12 ist somit nur durch ein Brechen beziehungsweise ein Zerstören des Versiegelungselements 66 möglich.

Die Verstauvorrichtung weist ein Schleusenelement 16 auf, das einen Durchgriff an dem ersten Verschlusselement 12 und dem zweiten Verschlusselement 14 vorbei in den Verstauraum 18 behindert. Somit sichert das Schleusenelement 16 in einer Verstauposition einen Zugang von der Umgebung 20 zum Verstauraum 18 vor einem unerwünschten Zugriff. In einer Gebrauchsposition gibt das Schleusenelement 16 den Zugang von der Umgebung 20 zu dem Verstauraum 18 frei. Das Schleusenelement 16 ist, wie auch das erste Verschlusselement 12, an der ersten Außenwandung 24 angeordnet. Dazu ist das Schleusenelement 16 relativ zur ersten Außenwandung 24 und zur zweiten Außenwandung 26 flexibel auslenkbar ausgebildet. Somit ist das Schleusenelement 16 als Schleusenklappe ausgebildet. Das Schleusenelement 16 weist eine Wandung auf, die aus einem Kunststoffmaterial gebildet ist.

Somit sind das erste Verschlusselement 12, das zweite Verschlusselement 14 und das Schleusenelement 16 jeweils zum Großteil von einem biegeweichen Material gebildet. Das erste Verschlusselement 12, das zweite Verschlusselement 14 und das Schleusenelement 16 sind dabei jeweils zum Großteil von einer Kunststofffolie mit einer Dicke von 3 mm gebildet. Das Schleusenelement 16 ist, von der Umgebung 20 in einer Richtung 22 des Verstauraums 18 betrachtet, hinter dem ersten Verschlusselement 12 und dem zweiten Verschlusselement 14 angeordnet.

Das zweite Verschlusselement 14 liegt im Verstauzustand teilweise am ersten Verschlusselement 12 und teilweise am Schleusenelement 16 an. Das Schleusenelement 16 grenzt an den Verstauraum 18 an und bildet somit eine Begrenzungsfläche 60 des Verstauraums 18. Ferner bildet das Schleusenelement 16 im Bereich der ersten Außenwandung 24 einen Anschlag. Wird ein lang gestreckter Gegenstand durch das Flausch- und Hakenband 42 zwischen dem ersten Verschlusselement 12 und dem zweiten Verschlusselement 14 durchgeschoben, stößt er gegen das Schleusenelement 16. Ein Eindringen des Gegenstands in den Verstauraum 18 ist dadurch vermieden.

**Bezugszeichen**

| | | | |
|---|---|---|---|
| 10 | Verstaueinheit | 50 | Aussparung |
| 12 | Verschlusselement | 52 | Außenwandungslasche |
| 14 | Verschlusselement | 54 | Außenwandungslasche |
| 16 | Schleusenelement | 56 | Verschlusselementlasche |
| 18 | Verstauraum | 58 | Verschlusselementlasche |
| 20 | Umgebung | 60 | Begrenzungsfläche |
| 22 | Richtung | 62 | Begrenzungsfläche |
| 24 | Außenwandung | 64 | Begrenzungsfläche |
| 26 | Außenwandung | 66 | Versiegelungselement |
| 28 | Klettverschlusseinheit | 68 | Verschlusseinheit |
| 30 | Lascheneinheit | | |
| 32 | Gegenstand | | |
| 34 | Schwimmweste | | |
| 36 | Versiegelungseinheit | | |
| 38 | Randbereich | | |
| 40 | Öffnung | | |
| 42 | Flausch- und Hakenband | | |
| 44 | Zugband | | |
| 46 | Griff | | |
| 48 | Aussparung | | |

## Patentansprüche

1. Verstauvorrichtung, insbesondere Schwimmwestenverstauvorrichtung, mit einer Verstaueinheit (10), die ein erstes Verschlusselement (12) und zumindest ein zweites Verschlusselement (14) aufweist, die dazu vorgesehen sind, einen Verstauraum (18) der Verstaueinheit (10) von einer Umgebung (20) abzugrenzen, wobei ein Schleusenelement (16) dazu vorgesehen ist, einen Durchgriff an dem ersten Verschlusselement (12) und dem zweiten Verschlusselement (14) vorbei in den Verstauraum (18) zumindest zu behindern, wobei das Schleusenelement (16) von dem ersten und zweiten Verschlusselement (12, 14), einem Flausch- und Hakensystem, einem Klebeband und/oder einer Naht differierend ausgebildet ist.

2. Verstauvorrichtung nach Anspruch 1, **dadurch gekennzeichnet, dass** das Schleusenelement (16), von der Umgebung (20) in einer Richtung (22) des Verstauraums (18) betrachtet, hinter dem ersten Verschlusselement (12) und dem zweiten Verschlusselement (14) angeordnet ist.

3. Verstauvorrichtung nach Anspruch 1 oder 2, **dadurch gekennzeichnet, dass** das Schleusenelement (16) als Schleusenklappe ausgebildet ist.

4. Verstauvorrichtung nach einem der vorhergehenden Ansprüche, **dadurch gekennzeichnet, dass** das erste Verschlusselement (12) von einer ersten Verschlussklappe gebildet ist.

5. Verstauvorrichtung nach einem der vorhergehenden Ansprüche, **dadurch gekennzeichnet, dass** das zweite Verschlusselement (14) von einer zweiten Verschlussklappe gebildet ist.

6. Verstauvorrichtung nach einem der vorhergehenden Ansprüche, **dadurch gekennzeichnet, dass** das zweite Verschlusselement (14) in einem Verstauzustand zumindest teilweise am ersten Verschlusselement (12) und zumindest teilweise am Schleusenelement (16) anliegt.

7. Verstauvorrichtung nach einem der vorhergehenden Ansprüche, **dadurch gekennzeichnet, dass** das Schleusenelement (16) an den Verstauraum (18) zumindest teilweise angrenzt.

8. Verstauvorrichtung nach einem der vorhergehenden Ansprüche, **dadurch gekennzeichnet, dass** das erste Verschlusselement (12) und das Schleusenelement (16) an einer ersten Außenwandung (24) der Verstaueinheit (10) angeordnet sind.

9. Verstauvorrichtung nach Anspruch 8, **dadurch gekennzeichnet, dass** das zweite Verschlusselement (14) an einer zweiten Außenwandung (26) angeordnet ist, die der ersten Außenwandung (24) gegenüberliegend angeordnet ist.

10. Verstauvorrichtung nach einem der vorhergehenden Ansprüche, **dadurch gekennzeichnet, dass** das erste Verschlusselement (12), das zweite Verschlusselement (14) und das Schleusenelement (16) jeweils zumindest zum Großteil von einem biegeweichen Material gebildet sind.

11. Verstauvorrichtung nach Anspruch 10, **dadurch gekennzeichnet, dass** das erste Verschlusselement (12), das zweite Verschlusselement (14) und das Schleusenelement (16) jeweils zumindest zum Großteil von einer Kunststofffolie gebildet sind.

12. Verstauvorrichtung nach einem der vorhergehenden Ansprüche, **gekennzeichnet durch** eine Verschlusseinheit (68), die dazu vorgesehen ist, das erste Verschlusselement (12) und zweite Verschlusselement (14) in einem Verstauzustand miteinander zu verbinden.

13. Verstauvorrichtung nach Anspruch 12, **dadurch gekennzeichnet, dass** die Verschlusseinheit (68) von einer Klettverschlusseinheit (28) gebildet ist.

14. Verstauvorrichtung nach einem der vorhergehenden Ansprüche, **gekennzeichnet durch** eine Lascheneinheit (30), die dazu vorgesehen ist, einen Gegenstand (32), insbesondere eine Schwimmweste (34), aus dem Verstauraum (18) zu ziehen.

15. Verstauvorrichtung nach einem der vorhergehenden Ansprüche, **gekennzeichnet durch** eine Versiegelungseinheit (36), die dazu vorgesehen ist, bei einem Öffnungsvorgang zumindest teilweise zerstört zu werden.

16. System mit einer Verstauvorrichtung nach einem der vorhergehenden Ansprüche und mit einer Schwimmweste (34).

## Claims

1. Stowage device, in particular life jacket stowage device, with a stowage unit (10) comprising a first closure element (12) and at least one second stowage element (14), which are configured to delimit a stowage space (18) of the stowage unit (10) from an environment (20), wherein a valve element (16) is configured to at least encumber a reach-through, along the first closure element (12) and the second closure element (14), into the stowage space (18), wherein the valve element (18) is embodied differently from the first and second closure elements (12, 14), from a hook-and-loop system, from an adhesive tape and/or from a seam.

2. Stowage device according to claim 1,
**characterised in that,** viewed from the environment (20) in a direction (22) towards the stowage space (18), the valve element (16) is arranged behind the first closure element (12) and the second closure element (14).

3. Stowage device according to claim 1 or 2,
**characterised in that** the valve element (16) is embodied as a valve flap.

4. Stowage device according to one of the preceding claims,
**characterised in that** the first closure element (12) is implemented by a first closure flap.

5. Stowage device according to one of the preceding claims,
**characterised in that** the second closure element (14) is implemented by a second closure flap.

6. Stowage device according to one of the preceding claims,
**characterised in that,** in a stowage state, the second closure element (14) abuts at least partly on the first closure element (12) and at least partly on the valve element (16).

7. Stowage device according to one of the preceding claims,
**characterised in that** the valve element (16) at least partly abuts on the stowage space (18).

8. Stowage device according to one of the preceding claims,
**characterised in that** the first closure element (12) and the valve element (16) are arranged on a first outer wall (24) of the stowage unit (10).

9. Stowage device according to claim 8,
**characterised in that** the second closure element (14) is arranged on a second outer wall (26), which is arranged opposite the first outer wall (24).

10. Stowage device according to one of the preceding claims,
**characterised in that** the first closure element (12), the second closure element (14) and the valve element (16) are each implemented at least to a large extent of a flexurally supple material.

11. Stowage device according to claim 10,
**characterised in that** the first closure element (12), the second closure element (14) and the valve element (16) are each implemented at least to a large extent of a synthetic film.

12. Stowage device according to one of the preceding claims,
**characterised by** a closure unit (68), which is configured to connect the first closure element (12) and the second closure element (14) to one another in a stowage state.

13. Stowage device according to claim 12,
**characterised in that** the closure unit (68) is embodied by a hook-and-loop fastener unit (28).

14. Stowage device according to one of the preceding claims,
**characterised by** a tab unit (30), which is configured to pull an object (32), in particular a life jacket (34), out of the stowage space (18).

15. Stowage device according to one of the preceding claims,
**characterised by** a sealing unit (36), which is configured to be at least partly destroyed in an opening process.

16. System with a stowage device according to one of the preceding claims and with a life jacket (34).

## Revendications

1. Dispositif de rangement, notamment dispositif de rangement de gilets de sauvetage, avec une unité de rangement (10) comprenant un premier élément de fermeture (12) et au moins un deuxième élément de fermeture (14), qui sont configurés pour délimiter un espace de rangement (18) de l'unité de rangement (10) contre un environnement (20),
où un élément de vanne (16) est prévu pour au moins entraver une pénétration, le long du premier élément de fermeture (12) et du deuxième élément de fermeture (14), dans l'espace de rangement (18),
où l'élément de vanne (16) est implémenté différant du premier élément de fermeture (12) et du deuxième élément de fermeture (14), d'un système crochets et boucles, d'un ruban adhésif et/ou d'une couture.

2. Dispositif de rangement selon la revendication 1,
**caractérisé en ce que,** vu de l'environnement (20) vers une direction (22) de l'espace de rangement (18), l'élément de vanne (16) est agencé derrière du premier élément de fermeture (12) et du deuxième élément de fermeture (14).

3. Dispositif de rangement selon l'une quelconque des revendications 1 ou 2,
**caractérisé en ce que** l'élément de vanne (16) est réalisé comme clapet de vanne.

4. Dispositif de rangement selon l'une quelconque des revendications précédentes,
**caractérisé en ce que** le premier élément de fermeture (12) est implémenté par un premier clapet de fermeture.

5. Dispositif de rangement selon l'une quelconque des revendications précédentes,
**caractérisé en ce que** le deuxième élément de fermeture (14) est implémenté par un deuxième clapet de fermeture.

6. Dispositif de rangement selon l'une quelconque des revendications précédentes,
**caractérisé en ce qu',** en état de rangement, le deuxième élément de fermeture (14) jouxte au moins partiellement le premier élément de fermeture (12) et au moins partiellement l'élément de vanne (16).

7. Dispositif de rangement selon l'une quelconque des revendications précédentes,
**caractérisé en ce que** l'élément de vanne (16) avoisine au moins partiellement l'espace de rangement (18).

8. Dispositif de rangement selon l'une quelconque des revendications précédentes,
**caractérisé en ce que** le premier élément de fermeture (12) et l'élément de vanne (16) sont disposés sur une première paroi extérieure (24) de l'unité de rangement (10).

9. Dispositif de rangement selon la revendication 8,
**caractérisé en ce que** le deuxième élément de fermeture (14) est disposé sur une deuxième paroi extérieure (26), qui est agencée vis-à-vis de la première paroi extérieure (24).

10. Dispositif de rangement selon l'une quelconque des revendications précédentes,
**caractérisé en ce que** le premier élément de fermeture (12), le deuxième élément de fermeture (14) et l'élément de vanne (16) sont au moins en grande partie implémentés d'un matériau souple en flexion.

11. Dispositif de rangement selon la revendication 10,
**caractérisé en ce que** le premier élément de fermeture (12), le deuxième élément de fermeture (14) et l'élément de vanne (16) sont chacun, au moins en grande partie, implémentés d'une feuille synthétique.

12. Dispositif de rangement selon l'une quelconque des revendications précédentes,
**caractérisé par** une unité de fermeture (68) configurée, en état de rangement, pour raccorder le premier élément de fermeture (12) et le deuxième élément de fermeture (14) l'un avec l'autre.

13. Dispositif de rangement selon la revendication 12,
**caractérisé en ce que** l'unité de fermeture (68) est réalisée par une unité crochets et boucles (28).

14. Dispositif de rangement selon l'une quelconque des revendications précédentes,
**caractérisé par** une unité de languette (30) prévue pour tirer un objet (32), en particulier un gilet de sauvetage (34), de l'espace de rangement (18).

15. Dispositif de rangement selon l'une quelconque des revendications précédentes,
**caractérisé par** une unité de cachetage (36) prévue à être détruite au moins partiellement en procès d'ouverture.

16. Système avec un dispositif de rangement selon l'une quelconque des revendications précédentes et avec un gilet de sauvetage (34).
